# EUROPEAN PATENT APPLICATION

(11) **EP 4 406 431 A1**
(43) Date of publication of application: **31.07.2024**
(21) Application number: 24275009.9
(22) Date of filing: 08.02.2024
(51) Int. Cl.: A24F 40/40, A24F 15/015, A24F 40/42, A24F 40/10

(54) **AN ELECTRONIC CIGARETTE WITH AN EASILY DETACHABLE REFILL CONTAINER**

(30) Priority: 08.02.2023 CN 202320157754 U
(71) Applicant: Insta Fill Ltd, Bolton Lancashire BL1 8HF (GB)
(72) Inventor: CHEN, Jiale, Shenzhen City, (CN); CHEN, Jiaze, Shenzhen City, (CN); LU, Shihu, Dujun City, (CN)
(74) Representative: Wilson Gunn

(57) **Abstract**

This invention discloses an electronic cigarette with an easily detachable refill container, comprising, in sequence from top to bottom, a mouthpiece, an atomizer, a battery, and the refill container. The lower end of the mouthpiece is fitted onto the upper end of the atomizer, and the lower end of the atomizer is fitted onto the upper end of the battery. The battery has an empty side and the entire battery is structured in an inverted "L" shape. The empty side of the battery forms an installation notch that is compatible with the refill container, allowing the refill container to be detachably connected within this notch. In this invention, the battery is set in an inverted "L" shape structure, which enables a stable connection of the refill container within the installation notch. The refill container can maintain a secure connection over long periods and withstand multiple installations and removals.

## Description

### Technical Field of the Invention

The present disclosure pertains to the field of electronic cigarette technology, specifically to an electronic cigarette with an easily detachable refill container.

### Background to the Invention

Electronic cigarettes, as substitutes for traditional cigarettes, have gained increasing attention and favour due to their safety, convenience, health, and environmental benefits. Market-available electronic cigarettes include atomizers and power supply components. The atomizer contains an airflow channel, atomization components for atomizing e-liquid, and storage components for storing e-liquid. The atomization components further include a piercing component for puncturing the storage component, an e-liquid-absorbing component for absorbing e-liquid, and a heating element for heating the e-liquid-absorbing component. When the heating element heats up, it vaporizes the e-liquid in the e-liquid-absorbing component, producing smoke that flows out through the airflow channel to the user, mimicking the effect of smoking a real cigarette.

A Chinese invention patent with publication number CN115363262A discloses an electronic cigarette with an refill container at the bottom, characterized by including: an electronic cigarette body, which comprises a cigarette rod and a cartridge; a mouthpiece formed on the cigarette rod, electronic components set inside the cigarette rod including a circuit board, a microphone, and a power supply device, both the microphone and the power supply device are electrically connected with the circuit board; the cartridge is located below the electronic components and includes an refill container and an atomization core set within the refill container, which is electrically connected with the power supply device; a smoking channel that connects to the mouthpiece is set within the electronic cigarette body, including a first channel inside the cigarette rod and a second channel inside the atomization core, which has an atomization area; an air inlet is set on the cigarette rod, and a guide air outlet is set at the top of the refill container, connecting the air inlet with the second channel.

From the existing technology, it's apparent that electronic cigarettes with a refill container set at the bottom have been developed to avoid damage to electronic components caused by e-liquid leaks from the refill container. However, refill containers located at the bottom of existing electronic cigarettes can become unstable and detach after multiple installations and removals, affecting the user experience.

### Summary of the Invention

To overcome the aforementioned technical shortcomings, the present disclosure provides an electronic cigarette with an easily detachable refill container.

To address the aforementioned issue, the present disclosure is implemented according to the following technical scheme:
According to the present invention there is provided an electronic cigarette with an easily detachable refill container. The electronic cigarette may include a mouthpiece. The electronic cigarette may include an atomizer. The electronic cigarette may include a battery. The electronic cigarette may include a refill container. The electronic cigarette may include in order from top to bottom, a mouthpiece, an atomizer, a battery, and a refill container.

The lower end of the mouthpiece may be fitted onto the upper end of the atomizer. The lower end of the atomizer may be fitted onto the upper end of the battery. The battery may have an empty side. The entire battery may comprise an inverted "L" shape structure. The empty side of the battery may form an installation notch adapted to the refill container. The refill container may be detachably connected in the installation notch. The refill container may be sized to completely fill the installation notch when it is connected in the installation notch. The refill container may be sized and shaped so that when connected in the installation notch its outer surfaces are substantially flush with the adjacent outer surfaces of the battery.

As a preferred embodiment of the present disclosure, the upper end of the refill container may have an upward protruding e-liquid delivery tube. The lower surface of the upper end of the battery may be provided with a connection hole. The connection hole may be adapted to the e-liquid delivery tube. The e-liquid delivery tube may be embedded into the connection hole to fix the refill container securely in the installation notch.

As a preferred embodiment of the present disclosure, the side of the battery facing the installation notch may be provided with a slide formation, such as a groove. The side of the refill container may have a cooperating slide formation, such as a slider that matches the slide groove. The cooperating formations may be arranged to engage with each other to retain the refill bottle in a sliding relationship to the battery.

As a preferred embodiment of the present disclosure, the slide groove may comprise a T-shaped groove. The two sides of the slider respectively may comprise protrusions that match the T-shaped groove.

In particular, opposite lateral edges of the side of the battery facing the installation notch may be provided with opposed rails having an inverted L-shaped cross section. The opposed lateral sides of the refill container adjacent the side which, in use, faces the side of the battery may be provided with channels adjacent that side positioned and sized to receive the free ends on the L-shaped formations in use, to capture the refill container in a sliding relationship to the battery.

As a preferred embodiment of the present disclosure, the number of slide grooves may be 2 to 4.

As a preferred embodiment of the present disclosure, the number of slide grooves may be 2. The two slide grooves may be respectively set on both side edges of the battery side.

As a preferred embodiment of the present disclosure, the side of the battery at the lower end of the installation notch may be provided with a limiting notch. The inner side of the refill container may be provided with a corresponding limiting protrusion. The limiting protrusion and limiting notch may be positioned so that when the refill container is slidably engaged with the battery and fully received into the installation notch, the limiting protrusion is received into the limiting notch. Thus, the limiting protrusion and limiting notch may act to retain the refill container in position relative to the battery.

As a preferred embodiment of the present disclosure, below the limiting notch, there may be provided a guide notch with an inclined surface.

As a preferred embodiment of the present disclosure, the outer side of the battery may have a charging port.

As a preferred embodiment of the present disclosure, the inside of the mouthpiece may be equipped with a gasket. The gasket may be located between the lower surface inside the mouthpiece and the upper surface of the atomizer. The gasket may be made of rubber or silicone.

Compared to existing technology, the beneficial effect of the present disclosure is: the present disclosure innovatively improves the structure of the electronic cigarette by setting the battery and refill container at the bottom of the electronic cigarette, improving the structure of the battery to have an empty side and an inverted "L" shape structure, thereby forming an installation notch on the empty side of the battery adapted to the refill container. Through structural improvements to the battery, the refill container can be detachably connected in the installation notch. In the present disclosure, setting the battery in an inverted "L" shape structure allows for a stable connection in the refill container installation notch, ensuring the refill container remains securely connected over long periods and withstands multiple installations and removals.

### Detailed Description of the Invention

In order that the invention may be more clearly understood one or more embodiments thereof will now be described, by way of example only, with reference to the accompanying drawings, of which:
- Figure 1: is a schematic diagram of the structure of the electronic cigarette with an easily detachable refill container according to the present disclosure;
- Figure 2: is an exploded view of the electronic cigarette with an easily detachable refill container according to the present disclosure;
- Figure 3: is a cross-sectional schematic diagram of the electronic cigarette with an easily detachable refill container according to the present disclosure;
In the figures: 1, mouthpiece; 11, gasket; 2, atomizer; 3, battery; 31, installation notch; 32, slide groove; 33, limiting notch; 34, guide notch; 4, refill container; 41, slider; 42, limiting protrusion.

The preferred embodiment of this invention is explained below in conjunction with the drawings. It should be understood that the described preferred embodiment is only for explaining and interpreting this invention and not for limiting this invention.

The detailed characteristics and advantages of this invention are described in detail in the implementation method, sufficient for anyone familiar with the related technology to understand the technical content of present disclosure and implement it. Based on the content disclosed in this specification, claims, and drawings, anyone familiar with the related technology can easily understand the objectives and advantages related to this invention. The following examples are further detailed explanations of this invention's viewpoints but do not limit the scope of this invention.

Moreover, the embodiments of this invention are disclosed in the drawings for the purpose of cleanliness. Some conventional structures and components in the drawings may be illustrated in a simplified manner, and some features in the drawings of this case may be slightly enlarged or altered in proportion or size to facilitate understanding and viewing of the technical features of this invention, but this does not limit this invention.

It should be understood that the terms "upper," "lower," and other directional or positional relationships are based on the orientations or positional relationships shown in the drawings, merely for convenience in describing this invention and simplifying the description, and do not indicate or imply that the device or element referred to must have a specific orientation, be constructed and operated in a specific orientation, and thus should not be construed as limiting this invention. In addition, terms "first," "second" are only for descriptive purposes and should not be construed as indicating or implying relative importance or implicitly indicating the quantity of the technical features indicated. Thus, features defined as "first," "second" may include one or more of such features. In the description of the present disclosure, it should be noted that, unless otherwise specified and limited, the terms "mounted," "connected," "linked" should be broadly understood, for example, they may be fixed connections, detachable connections, or integrally connected; mechanical connections or electrical connections; direct connections or indirect connections through intermediaries, or internal communication between two components.

Furthermore, unless defined otherwise, all terms used herein, including technical and scientific terms, have the meaning commonly understood by one of ordinary skill in the art to which this invention belongs. Further, the definitions of such terms in this specification should be interpreted to have a consistent meaning with the related art and are not interpreted in an idealized or overly formal sense.

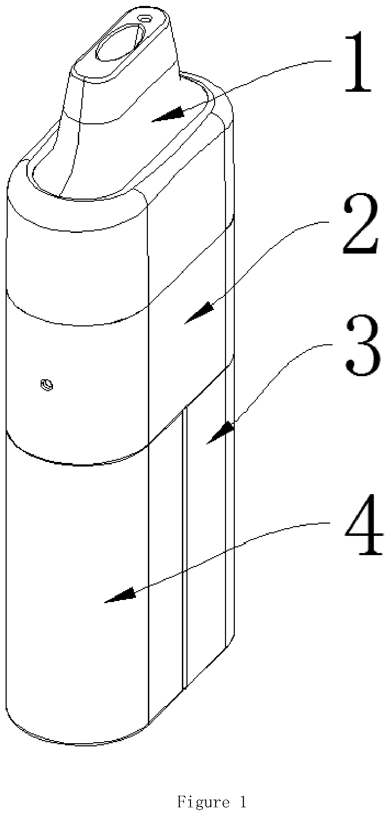

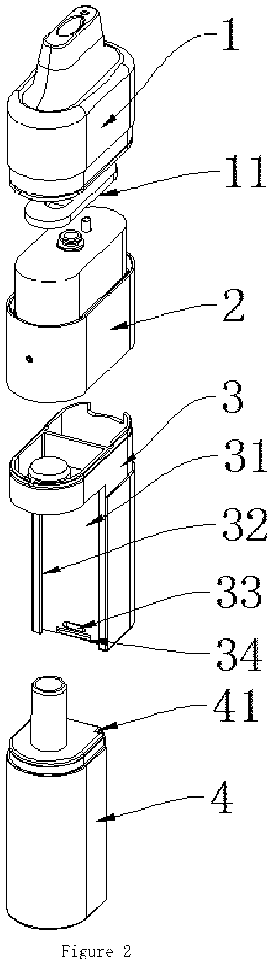

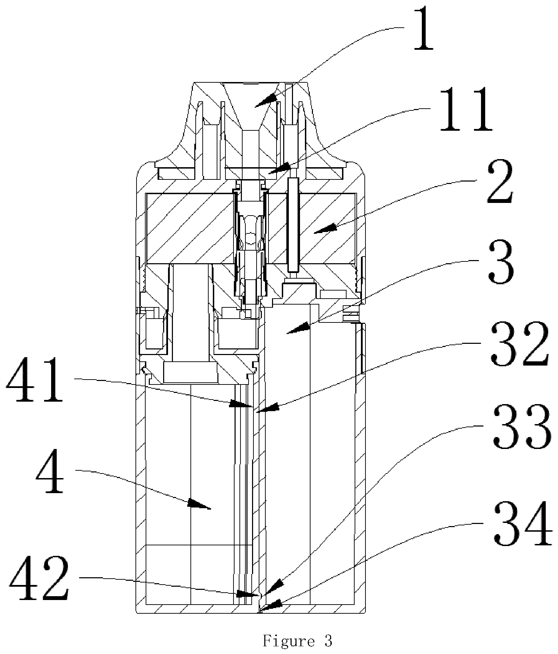

Figures 1-3 show the preferred structure of the electronic cigarette with an easily detachable refill container 4 according to the present disclosure.

This invention discloses an electronic cigarette with an easily detachable refill container 4, including, from top to bottom, a mouthpiece 1, an atomizer 2, a battery 3, and a refill container 4.

The lower end of the mouthpiece 1 is fitted onto the upper end of the atomizer 2, the lower end of the atomizer 2 is fitted onto the upper end of the battery 3, the battery 3 has an empty side and the entire battery 3 is in an inverted "L" shape structure, the empty side of the battery 3 forms an installation notch 31 adapted to the refill container 4, and the refill container 4 is detachably connected in the installation notch 31.

When the refill container is connected in the installation notch 31 its exposed outer surfaces lie substantially flush with the adjacent surfaces of the battery.

As a preferred implementation of this invention, the upper end of the refill container 4 has an upward protruding e-liquid delivery tube, the lower surface of the upper end of the battery 3 is provided with a connection hole adapted to the e-liquid delivery tube, and the e-liquid delivery tube is embedded into the connection hole to securely fix the refill container 4 in the installation notch 31.

As a preferred implementation of this invention, the side of the battery 3 facing the installation notch 31 is provided with a slide groove 32, and the side of the refill container 4 has a slider 41 that matches the slide groove 32.

As a preferred implementation of this invention, the slide groove 32 is a T-shaped groove, and the two sides of the slider 41 respectively have protrusions that match the T-shaped groove. The T-shaped groove is formed by opposed rails having an inverted L-shaped cross section along opposite lateral edges of the side of the battery facing the installation notch. The protrusions on the slider are formed by channels on either side of the refill bottle sized to receive the free ends on the L-shaped rails of the battery in use, so that the formations are captured by the L-shaped rails when the refill container is fitted into the installation notch.

As a preferred implementation of this invention, the number of slide grooves 32 is 2 to 4.

As a preferred implementation of this invention, the number of slide grooves 32 is 2, and the two slide grooves 32 are respectively set on both side edges of the battery 3 side.

As a preferred implementation of this invention, the side of the battery 3 at the lower end of the installation notch 31 is provided with a limiting notch 33, and the inner side of the refill container 4 is provided with a corresponding limiting protrusion 42.

As a preferred implementation of this invention, below the limiting notch 33, there is a guide notch 34 with an inclined surface.

As a preferred implementation of this invention, the outer side of the battery 3 has a charging port.

As a preferred implementation of this invention, the inside of the mouthpiece 1 is equipped with a gasket 11, the gasket 11 is located between the lower surface inside the mouthpiece 1 and the upper surface of the atomizer 2, and the gasket 11 is made of rubber or silicone.

The working principle of the electronic cigarette with an easily detachable refill container 4 disclosed by the present disclosure is:
This invention creatively improves the structure of the electronic cigarette by setting the battery 3 and refill container 4 at the bottom of the electronic cigarette, improving the structure of the battery 3 to have an empty side and the entire battery 3 in an inverted "L" shape structure, thereby forming an installation notch 31 on the empty side of the battery 3 adapted to the refill container 4, through structural improvements to the battery 3, enabling the refill container 4 to be detachably connected in the installation notch 31. In the present disclosure, setting the battery 3 in an inverted "L" shape structure allows for a stable connection with the refill container 4 in the installation notch 31, ensuring the refill container 4 remains securely connected over long periods and withstands multiple installations and removals.

Other structures of the electronic cigarette with an easily detachable refill container 4 disclosed by this implementation example refer to existing technology.

The above description is only the preferred embodiments of this invention and is not intended to limit this invention. Therefore, any modifications, equivalent changes, and embellishments made without departing from the content of the technical scheme of this invention, according to the technical essence of this invention, still fall within the scope of the technical scheme of this invention. The one or more embodiments are described above by way of example only. Many variations are possible.

## Claims

1. An electronic cigarette with an easily detachable refill container (4), **characterized in that** it includes, in order from top to bottom, a mouthpiece (1), an atomizer (2), a battery (3), and a refill container (4);
wherein the lower end of the mouthpiece (1) is fitted onto the upper end of the atomizer (2), the lower end of the atomizer (2) is fitted onto the upper end of the battery (3), the battery (3) has an empty side and the entire battery (3) is in an inverted "L" shape structure, the empty side of the battery (3) forms an installation notch (31) adapted to the refill container (4), and the refill container (4) is detachably connected in the installation notch (31).

2. The electronic cigarette with an easily detachable refill container (4) according to claim 1, wherein:
the upper end of the refill container (4) has an upward protruding e-liquid delivery tube, the lower surface of the upper end of the battery (3) is provided with a connection hole adapted to the e-liquid delivery tube, and the e-liquid delivery tube is embedded into the connection hole to fix the refill container (4) securely in the installation notch (31).

3. The electronic cigarette with an easily detachable refill container (4) according to either claim 1 or 2, wherein:
a slide groove (32) is set on the side of the battery (3) facing the installation notch (31), and the side of the refill container (4) has a slider (41) that matches the slide groove (32).

4. The electronic cigarette with an easily detachable refill container (4) according to claim 3 wherein opposite lateral edges of the side of the battery (3) facing the installation notch (31) are provided with opposed rails having an inverted L-shaped cross section.

5. The electronic cigarette with an easily detachable refill container (4) according to claim 4 wherein the opposed lateral sides of the refill container (4) adjacent the side which, in use, faces the side of the battery (3) is provided with channels adjacent that side positioned and sized to receive the free ends on the L-shaped rails of the battery (3) in use, to capture the refill container (4) in a sliding relationship to the battery (3).

6. The electronic cigarette with an easily detachable refill container (4) according to claim 3, wherein:
the slide groove (32) is a T-shaped groove, and the two sides of the slider (41) respectively have protrusions that match the T-shaped groove.

7. The electronic cigarette with an easily detachable refill container (4) according to either claim 3 or 6, **characterized in that**: the number of slide grooves (32) is 2 to 4.

8. The electronic cigarette with an easily detachable refill container (4) according to claim 7, **characterized in that**:
the number of slide grooves (32) is 2, and the two slide grooves (32) are respectively set on both sides of the battery side.

9. The electronic cigarette with an easily detachable refill container (4) according to any preceding claim, **characterized in that**:
a limiting notch (33) is set at the lower end of the installation notch (31) on the side of the battery (3), and the inner side of the refill container (4) is provided with a corresponding limiting protrusion (42).

10. The electronic cigarette with an easily detachable refill container (4) according to claim 9, **characterized in that**:
below the limiting notch (33), there is a guide notch (34) with an inclined surface.

11. The electronic cigarette with an easily detachable refill container (4) according to any preceding claim, **characterized in that**:
the outer side of the battery (3) has a charging port.

12. The electronic cigarette with an easily detachable refill container (4) according to any preceding claim, **characterized in that**:
the inside of the mouthpiece (1) is equipped with a gasket (11), the gasket (11) is located between the lower surface inside the mouthpiece (1) and the upper surface of the atomizer (2), and the gasket (11) is made of rubber or silicone.
